# EUROPEAN PATENT SPECIFICATION

(11) **EP 4 055 093 B1**
(45) Date of publication and mention of the grant of the patent: **15.05.2024**
(21) Application number: 20803919.8
(22) Date of filing: 16.10.2020
(51) Int. Cl.: C08K 3/32, C08K 5/00, C08K 5/5313, C08K 7/14, C08L 67/02, C08L 71/12

(54) **NON-HALOGENATED FLAME RETARDANT AND REINFORCED POLY(ALKYLENE TEREPHTHALATE) POLY(PHENYLENE ETHER) COMPOSITIONS METHODS OF MANUFACTURE AND USES THEREOF**
NICHTHALOGENIERTE FLAMMHEMMENDE UND VERSTÄRKTE POLY(ALKYLENTEREPHTHALAT)-POLY(PHENYLENETHER)-ZUSAMMENSETZUNGEN, VERFAHREN ZUR HERSTELLUNG UND VERWENDUNGEN DAVON
COMPOSITIONS DE POLY(ALKYLÈNE TÉRÉPHTALATE)-POLY(PHÉNYLÈNE ÉTHER) RENFORCÉES, IGNIFUGES ET NON HALOGÉNÉES, PROCÉDÉS DE FABRICATION ET LEURS UTILISATIONS

(30) Priority: 08.11.2019 EP 19208103
(43) Date of publication of application: 14.09.2022
(73) Proprietor: SHPP Global Technologies B.V., 4612 PX Bergen op Zoom (NL)
(72) Inventor: LEE, Jung Ah, Selkirk, New York 12158 (US)
(74) Representative: Balder IP Law, S.L.
(86) International application number: PCT/IB2020/059766
(87) International publication number: WO 2021/090095

(56) References cited:
- WO-A1-2007/011099
- US-B2- 7 812 077

## Description

### CROSS-REFERENCE TO RELATED APPLICATION

This application claims the benefit of European Application No. EP19208103.2 filed on November 8, 2019.

### BACKGROUND

This disclosure relates to poly(alkylene terephthalate)-poly(phenylene ether) compositions, and in particular to non-halogenated flame retardant poly(alkylene terephthalate)-poly(phenylene ether) compositions with improved electrical and flammability properties, methods of manufacture, and uses thereof.

Poly(alkylene terephthalate)-poly(phenylene ether)s are useful in the manufacture of articles and components for a wide range of applications, from automotive parts to electronic appliances. Because of their broad use, particularly in electrical panels and protective devices such as miniature circuit breakers, it is desirable to provide a sufficient balance of flame retardancy and electrical tracking resistance.
US 7 812 077 B2 discloses a composition comprising 20 to 80 wt. % of a polyester component comprising a modified polybutylene terephthalate random copolymer derived from a polyethylene terephthalate component selected from polyethylene terephthalate and polyethylene terephthalate copolymers and having at least one residue derived from the polyethylene terephthalate component; from 5 to 35 wt. % of a flame retardant phosphinate (I), (R¹)(R²)(PO)-O]⁻ ₘM^{m+}, or (II), [(O-POR¹)(R³)(POR²-O)]²⁻ ₙM^{m+} ₓ, and/or a flame retardant polymer thereof, wherein R¹ and R² are independently are H, C1-C6-alkyl, or C6-C10-aryl; R³ is C1-C10, alkylene, C6-C10-arylene, -alkylarylene or -arylalkylene; M is an alkaline earth metal, alkali metal, Al, Ti, Zn, Fe, or boron; m is 1, 2, 3 or 4; n is 1, 2, or 3; and x is 1 or 2; 1 to 25 wt. % of a melamine polyphosphate, melamine cyanurate, melamine pyrophosphate, and/or melamine phosphate; and more than 0 to 25 wt. % of a polyetherimide.

There accordingly remains a need in the art for poly(alkylene terephthalate)-poly(phenylene ether) compositions that have enhanced flame retardancy with good retention of mechanical and electrical properties. It would be a further advantage if the compositions were lightweight.

### BRIEF DESCRIPTION

The above-described and other deficiencies of the art are met by a reinforced flame retardant composition comprising: 30-80 wt% of a polymer component comprising 25-65 wt% of a poly(alkylene terephthalate); 5-25 wt% of a poly(phenylene ether); optionally, 5-35 wt% of a polyamide; 5-30 wt% of a reinforcing mineral filler, preferably talc, 5-35 wt% of glass fibers; 4-25 wt% of a flame retardant component comprising: a metal di(C₁₋₆ alkyl)phosphinate and an auxiliary flame retardant comprising a phosphate, a phosphite, a phosphonate, a phosphinate different from the metal di(C₁₋₆ alkyl)phosphinate, a phosphine oxide, a phosphine, a phosphazene, melamine polyphosphate, melamine cyanurate, melamine pyrophosphate, melamine phosphate, a metal hydroxide, a metal borate, a metal oxide, a metal oxide hydroxide, or a combination thereof, preferably melamine polyphosphate; 0.01-2 wt% of a compatibilizing agent; 5-15 wt% of an impact modifier; optionally, 0.1-10 wt% of an additive composition; each based on the total weight of the composition, wherein a molded sample of the composition has a UL94 rating of V0 at a thickness of 1.5 millimeter, a UL94 rating of V0 at a thickness of 1.0 millimeter, a UL94 rating of V0 at a thickness of 0.8 millimeter, a UL94 rating of V0 at a thickness of 0.4 millimeter, or a combination thereof; and wherein the composition exhibits: a comparative tracking index of 250-399 volts, preferably 400-599 volts, more preferably 600 volts or greater as determined in accordance with UL 746A, a mean time of arc resistance of at least 120 seconds as determined according to ASTM D495, or a combination thereof

In another aspect, a method of manufacture comprises combining the above-described components to form a reinforced flame retardant composition.

In yet another aspect, an article comprises the above-described reinforced flame retardant composition.

In still another aspect, a method of manufacture of an article comprises molding, extruding, or shaping the above-described reinforced flame retardant composition into an article.

The above described and other features are exemplified by the detailed description.

### DETAILED DESCRIPTION

Poly(phenylene ether) compositions are commercially attractive materials because of their unique combination of properties, including, for example, high temperature resistance, dimensional and hydrolytic stability, low density, flame retardancy, and dielectric properties. Known mixtures of poly(phenylene ether)s and polyesters do not provide a sufficient balance of properties to make them commercially attractive for many applications. It is therefore apparent that a need exists for improved polyester-poly(phenylene ether) compositions, which overcome at least one of the aforementioned difficulties. The inventors hereof have discovered a reinforced flame retardant composition that includes a poly(phenylene ether), a poly(alkylene terephthalate), a reinforcing mineral filler, a flame retardant component, and glass fibers. A molded sample of the composition provides a UL94 rating of V0 at a thickness of 1.5 millimeter (mm), a UL94 rating of V0 at a thickness of 1.0 mm, a UL94 rating of V0 at a thickness of 0.8 mm, a UL94 rating of V0 at a thickness of 0.4 mm, or a combination thereof. Advantageously, the reinforced flame retardant compositions may have a high voltage arc resistance (HVAR) performance level category (PLC) of 5 or less; a comparative tracking index (CTI) PLC of 2 or less; and a high voltage tracking resistance (HVTR) PLC of zero

The reinforced flame retardant composition includes a polymer component. The polymer component includes a poly(phenylene ether), a poly(alkylene terephthalate), and optionally a polyamide. The polymer component may be present, for example, from 30-80 wt%, 35-75 wt%, 35-70 wt%, 35-65 wt%, or 35-60 wt%, each based on the total weight of the composition.

The poly(phenylene ether)s of the reinforced flame retardant compositions include Suitable poly(phenylene ether)s include those comprising repeating structural units having the formula 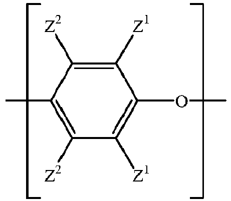 wherein each occurrence of Z¹ is independently halogen, unsubstituted or substituted C₁₋₁₂ hydrocarbyl (provided that the hydrocarbyl group is not tertiary hydrocarbyl), C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. As an example, Z¹ may be a di-n-butylaminomethyl group formed by reaction of a terminal 3,5-dimethyl-1,4-phenyl group with the di-n-butylamine component of an oxidative polymerization catalyst.

The poly(phenylene ether) may comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) may be in the form of a homopolymer, a copolymer, a graft copolymer, an ionomer, or a block copolymer, or a combination thereof.

In some aspects, the poly(phenylene ether) has an intrinsic viscosity of 0.25-1 deciliter per gram measured by Ubbelohde viscometer at 25°C in chloroform. Within this range, the poly(phenylene ether) intrinsic viscosity may be 0.25-0.65 deciliter per gram, or 0.25-0.5 deciliter per gram, or 0.25-0.4 deciliter per gram.

In some aspects, the poly(phenylene ether) comprises a homopolymer or copolymer of monomers including 2,6-dimethylphenol, 2,3,6-trimethylphenol, or a combination thereof.

Exemplary poly(phenylene ether) homopolymers are commercially available as, for example, PPO 630, 640, and 646 from SABIC, and XYRON S201A and S202A from Asahi Kasei Chemicals Corporation.

The poly(phenylene ether) may be present, for example, from 5-25 wt%, 5-20 wt%, 5-15 wt%, or 5-10 wt%, each based on the total weight of the composition.

The reinforced flame-retardant compositions include a poly(alkylene terephthalate). The alkylene group of the poly(alkylene terephthalate) may comprise 2-18 carbon atoms. Exemplary alkylene groups include ethylene, 1,3-propylene, 1,4-butylene, 1,5-pentylene, 1,6-hexylene, 1,4-cyclohexylene, 1,4-cyclohexanedimethylene, or a combination thereof. For example, the alkylene group is ethylene, 1,4-butylene, or a combination thereof.

The poly(alkylene terephthalate) may be derived from terephthalic acid (or a combination of terephthalic acid and up to 10 mol% of isophthalic acid) and a mixture comprising a linear C₂-C₆ aliphatic diol, such as ethylene glycol or 1,4-butylene glycol), and a C₆-C₁₂ cycloaliphatic diol, such as 1,4-cyclohexane diol, 1,4-cyclohexanedimethanol, dimethanol decalin, dimethanol bicyclooctane, 1,10-demaye diol, or a combination thereof. The ester units comprising the two or more types of diols may be present in the polymer chain as random individual units or as blocks of the same type of units.

The poly(alkylene terephthalate)s may include up to 10 wt%, preferably up to 5 wt% of residues of monomers other than alkylene diols and terephthalic acid. For example, the poly(alkylene terephthalate) may include the residue of isophthalic acid or units derived from an aliphatic acid, such as succinic acid, glutaric acid, adipic acid, pimelic acid, 1,4-cyclohexanedicarboxylic acid, or a combination thereof.

The poly(alkylene terephthalate) may be, but is not limited to, poly(ethylene terephthalate), poly(butylene terephthalate), poly(ethylene naphthanoate), poly(butylene naphthanoate), poly(cyclohexanedimethanol terephthalate), polypropylene terephthalate), or a combination thereof. In some aspects, the poly(alkylene terephthalate) is poly(ethylene terephthalate), poly(butylene terephthalate), or a combination thereof. In certain aspects, the poly(alkylene terephthalate) is poly(butylene terephthalate).

Dicarboxylic acids (e.g., aliphatic dicarboxylic acids, alicyclic dicarboxylic acids, aromatic dicarboxylic acids, or a combination thereof) and diols (e.g., aliphatic diols, alicyclic diols, aromatic diols, or a combination thereof) may be used to prepare the polyesters. Chemical equivalents of dicarboxylic acids (e.g., anhydrides, acid chlorides, acid bromides, carboxylate salts, or esters) and chemical equivalents of diols (e.g., esters, preferably C₁₋₈ esters such as acetate esters) may also be used to prepare the polyesters.

Exemplary aromatic dicarboxylic acids include isophthalic acid, terephthalic acid, 1,2-di(p-carboxyphenyl)ethane, 4,4'-dicarboxydiphenyl ether, 4,4'-bisbenzoic acid, and the like, and 1,4- or 1,5-naphthalene dicarboxylic acids and the like. A combination of isophthalic acid and terephthalic acid may be used. The weight ratio of isophthalic acid to terephthalic acid may be, for example, 91:9 to 2:98, or 25:75 to 2:98. Dicarboxylic acids containing fused rings that may be used to prepare the polyesters include 1,4-, 1,5-, and 2,6-naphthalenedicarboxylic acids. Exemplary cycloaliphatic dicarboxylic acids include, decahydronaphthalene dicarboxylic acids, norbornene dicarboxylic acids, bicyclooctane dicarboxylic acids, and 1,4-cyclohexanedicarboxylic acids.

Exemplary aliphatic diols include 1,2-ethylene glycol, 1,2- and 1,3-propylene glycol, 2,2-dimethyl-1,3-propane diol, 2-ethyl-2-methyl-1,3-propane diol, 1,3- and 1,5-pentane diol, dipropylene glycol, 2-methyl-1,5-pentane diol, 1,6-hexane diol, dimethanol decalin, dimethanol bicyclooctane, 1,4-cyclohexane dimethanol and its cis- and trans-isomers, triethylene glycol, 1,10-demaye diol, and the like, or a combination thereof. The diol may be ethylene glycol with 0.5-5 wt% of diethylene glycol. Exemplary aromatic diols include resorcinol, hydroquinone 1,5-naphthalene diol, 2,6-naphthalene diol, 1,4-naphthalene diol, 4,4'-dihydroxybiphenyl, bis(4-hydroxyphenyl)ether, bis(4-hydroxyphenyl)sulfone, or the like, or a combination thereof.

The poly(alkylene terephthalate) may be a poly(1,4-butylene terephthalate) (PBT) obtained by polymerizing a glycol component comprising at least 70 mol%, preferably at least 80 mol%, of tetramethylene glycol (1,4-butanediol), and an acid component comprising at least 70 mol%, preferably at least 80 mol% of terephthalic acid or polyester-forming derivatives thereof. Commercial examples of PBT include VALOX315 and VALOX 195 Resin available from SABIC.

The poly(alkylene terephthalate) may include a modified poly(butylene terephthalate), that is derived in part from poly(ethylene terephthalate) recycled PET, e.g., from used soft drink bottles. The PET-derived PBT polyester ("modified PBT") may be derived from a poly(ethylene terephthalate) component such as poly(ethylene terephthalate), a poly(ethylene terephthalate) copolymer, or a combination thereof. The modified PBT may further be derived from biomass-derived 1,4-butanediol, e.g., corn-derived 1,4-butanediol or a 1,4-butanediol derived from a cellulosic material. Unlike conventional molding compositions containing virgin PBT (PBT that is derived from 1,4-butanediol and terephthalic acid monomers), the modified PBT contains units derived from ethylene glycol and isophthalic acid. Use of modified PBT may provide a valuable way to effectively use underutilized scrap PET (from post-consumer or post-industrial streams) in PBT molding compositions, thereby conserving non-renewable resources and reducing the formation of greenhouse gases, e.g., carbon dioxide.

Commercial examples of modified PBT resins include those available under the trade name VALOX iQ Resin, available from SABIC. The modified PBT may be derived from the poly(ethylene terephthalate) component by depolymerization of the poly(ethylene terephthalate) component and polymerization of the depolymerized poly(ethylene terephthalate) component with 1,4-butanediol to provide the modified PBT.

The reinforced flame retardant composition may comprise a combination of virgin poly(alkylene terephthalate) and modified poly(alkylene terephthalate), including a combination of virgin and modified poly(1,4-butylene terephthalate), the latter obtained from recycled PET.

The poly(alkylene terephthalate) may be present from 25-65 wt%, 30-65 wt%, 25-60 wt%, 30-60 wt%, 25-50 wt%, 30-50 wt%, 25-45 wt%, 30-45 wt%, 25-40 wt%, 30-40 wt%, 35-65 wt%, 35-60 wt%, 35-50 wt%, 35-45 wt%, 40-65 wt%, 40-60 wt%, 40-50 wt%, 45-65 wt%, 45-60 wt%, 45-55 wt%, 50-65 wt%, or 50-60 wt%, each based on the total weight of the composition.

The polymer component of the reinforced flame retardant compositions may include a polyamide. Polyamides, also known as nylons, are characterized by the presence of a plurality of amide (-C(O)NH-) groups and are described in U.S. Patent No. 4,970,272 to Gallucci. Exemplary polyamides include polyamide-6, polyamide-6,6, polyamide-4,6, polyamide-11, polyamide-12, polyamide-6,10, polyamide-6,12, polyamide 6/6,6, polyamide-6/6,12, polyamide MXD,6 (where MXD is m-xylylene diamine), polyamide-6,T, polyamide-6,I, polyamide-6/6,T, polyamide-6/6,I, polyamide-6,6/6,T, polyamide-6,6/6,I, polyamide-6/6,T/6,I, polyamide-6,6/6,T/6,I, polyamide-6/12/6,T, polyamide-6,6/12/6,T, polyamide-6/12/6,I, polyamide-6,6/12/6,I, or a combination thereof. In some aspects, the polyamide comprises a polyamide-6,6. In some aspects, the polyamide comprises a polyamide-6 and a polyamide-6,6. In some aspects, the polyamide or combination of polyamides has a melting point (Tₘ) greater than or equal to 171°C.

Polyamides having an intrinsic viscosity of up to 400 milliliters per gram (mL/g) may be used, or, having a viscosity of 90-350 mL/g, or, having a viscosity of 110-240 mL/g, as measured in a 0.5 wt% solution in 96 wt% sulfuric acid in accordance with ISO 307. The polyamide may have a relative viscosity of up to 6, or a relative viscosity of 1.89-5.43, or a relative viscosity of 2.16-3.93. Relative viscosity is determined according to ISO 307 in a 1 wt% solution in 96 wt% sulfuric acid.

In some aspects, the polyamide comprises a polyamide having an amine end group concentration greater than or equal to 35 microequivalents amine end group per gram of polyamide (µeq/g) as determined by titration with HCl. The amine end group concentration may be greater than or equal to 40 µeq/g, or greater than or equal to 45 µeq/g. Amine end group content may be determined by dissolving the polyamide in a solvent, optionally with heat. The polyamide solution is titrated with 0.01 Normal hydrochloric acid (HCl) solution using an indication method. The amount of amine end groups is calculated based the volume of HCl solution added to the sample, the volume of HCl used for the blank, the molarity of the HCl solution, and the weight of the polyamide sample.

When used, the polyamide is present in amount from 5-35 wt%, 5-30 wt%, 5-25 wt%, 5-20 wt%, 5-15 wt%, 5-10 wt%, 10-35 wt%, 10-30 wt%, 10-25 wt%, 10-20 wt%, 10-15 wt%, 15-35 wt%, 15-30 wt%, 15-25 wt%, 15-20 wt%, 20-35 wt%, 20-30 wt%, 20-25 wt%, 25-35 wt%, or 25-30 wt%, each based on the total weight of the composition.

In addition to the polymer component comprising a poly(phenylene ether), a poly(alkylene terephthalate), and optionally a polyamide, the reinforced flame retardant composition comprises a flame retardant component. The flame retardant component includes a metal dialkylphosphinate and an auxiliary flame retardant. The flame retardant component may be present, for example, from 4-25 wt%, 4-23 wt%, 4-20 wt%, 4-15 wt%, 4-15 wt%, 4-10 wt%, 10-25 wt%, 10-20 wt%, 10-15 wt%, 15-25 wt%, 15-20 wt%, or 20-25 wt%, each based on the total weight of the composition.

As used herein, the term "metal dialkylphosphinate" refers to a salt comprising a metal cation and a dialkylphosphinate anion. The metal dialkylphosphinate has the formula 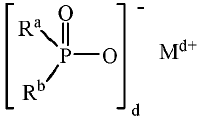 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, and n-pentyl. In some aspects, R^{a} and R^{b} are ethyl, M is aluminum, and d is 3 (that is, the metal dialkylphosphinate is aluminum tris(diethylphosphinate)). The metal dialkylphosphinate may be present from 4-24 wt%, 4-20 wt%, 4-15 wt%, 10-24 wt%, 10-20 wt%, 10-15 wt%, 15-24 wt%, 15-20 wt%, or 20-24 wt%, each based on the total weight of the composition.

The reinforced flame retardant compositions also include an auxiliary flame retardant. In an aspect, the auxiliary flame retardant comprises a melamine having the formula 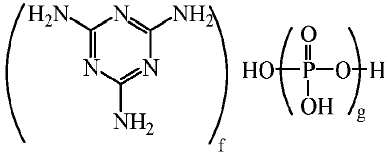 wherein g is 1-10,000, and the ratio of f to g is 0.5:1 to 1.7:1, or 0.7:1 to 1.3:1, or 0.9:1 to 1.1:1. It will be understood that this formula includes species in which one or more protons are transferred from the phosphate group(s) to the melamine group(s) When g is 1, the melamine flame retardant is melamine phosphate (CAS Reg. No. 20208-95-1). When g is 2, the melamine flame retardant is melamine pyrophosphate (CAS Reg. No. 15541 60-3). When g is, on average, greater than 2, the melamine flame retardant is a melamine polyphosphate (CAS Reg. No. 56386-64-2). In some aspects, the melamine flame retardant is melamine pyrophosphate, melamine polyphosphate, or a mixture thereof. In some aspects in which the melamine flame retardant is melamine polyphosphate, g has an average value of greater than 2-10,000, or 5-1,000, or 10-500. In some aspects in which the melamine flame retardant is melamine polyphosphate, g has an average value of greater than 2-500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Pat. No. 6,025,419 to Kasowski et al., or by heating melamine pyrophosphate under nitrogen at 290°C to constant weight, as described in U.S. Patent No. 6,015,510-Jacobson et al. In some aspects, the melamine flame retardant comprises melamine cyanurate.

The melamine flame retardant may have a low volatility. For example, in some aspects, the melamine flame retardant exhibits less than 1 percent weight loss by thermogravimetric analysis when heated at a rate of 20 °C per minute from 25-280 °C, or 25-300 °C, or 25-320 °C.

The auxiliary flame retardant may include inorganic flame retardants. Inorganic flame retardants may include metal hydroxides, metal oxides, polyphosphates, boron salts such as metal borates, inorganic antimony, tin, zinc, and molybdenum compounds, as well as red phosphorous. However, due to regulatory concerns, the auxiliary flame retardant is preferably substantially free of antimony, tin, and halogenated auxiliary flame retardants.

In an aspect, the auxiliary flame retardant includes a metal hydroxide, a metal borate, a pyrophosphate, a metal oxide, a metal oxide hydroxide, or a combination thereof. In some aspects, the auxiliary flame retardant includes a metal hydroxide. Exemplary metal hydroxides include, but are not limited to, magnesium hydroxide (for example, CAS Reg. No. 1309-42-8), aluminum hydroxide (for example, CAS Reg. No. 21645-51-2), cobalt hydroxide (for example, CAS Reg. No. 21041-93-0), or a combination thereof. The metal hydroxide may be coated, for example, with stearic acid or another fatty acid. The auxiliary flame retardant may include a metal borate, such as zinc borate; a pyrophosphate, such as sodium dihydrogen pyrophosphate or ammonium pyrophosphate; a metal oxide hydroxide, such as aluminum oxide hydroxide also known as Boehmite and commercially available as SASOL; a metal oxide, such as magnesium oxide (e.g., ELASTOMAG 170), or a combination thereof.

The auxiliary flame retardant may be monomeric, oligomeric, or polymeric, and may include a phosphate (P(=O)(OR)₃), phosphite (P(OR)₃), phosphonate (RP(=O)(OR)₂), phosphinate different from the metal di(C₁₋₆ alkyl)phosphinate (R₂P(=O)(OR)), phosphine oxide (R₃P(=O)), or phosphine (R₃P), wherein each R in the phosphorous-containing groups may be the same or different, provided that at least one R is an aromatic group. A combination of different phosphorous-containing groups may be used. The aromatic group may be directly or indirectly bonded to the phosphorous, or to an oxygen of the phosphorous-containing group (i.e., an ester).

In an aspect the auxiliary flame retardant is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups may be joined together to provide a cyclic group. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional flame retardants are also useful, for example, compounds of the formulas 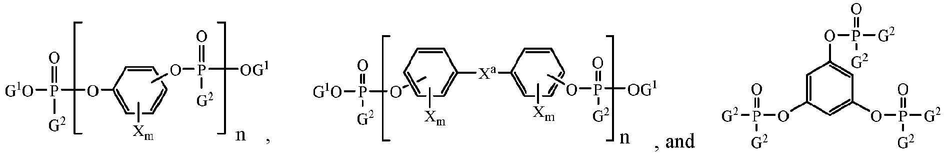 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0-4, and n is 1-30. In a specific aspect, X^{a} is a single bond, methylene, isopropylidene, or 3,3,5-trimethylcyclohexylidene.

Specific auxiliary flame retardants are inclusive of acid esters of formula 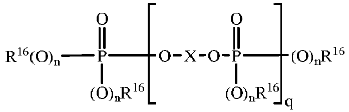 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, preferably by C₁₋₄ alkyl, and X is a mono- or poly-nuclear aromatic C₆₋₃₀ moiety or a linear or branched C₂₋₃₀ aliphatic radical, which may be OH-substituted and may contain up to 8 ether bonds, provided that at least one R¹⁶ or X is an aromatic group; each n is independently 0 or 1; and q is from 0.5-30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5-30. In some aspects each R¹⁶ is aromatic, e.g., phenyl; each X is a mono- or poly-nuclear aromatic C₆₋₃₀ moiety, including a moiety derived from formula (2); n is one; and q is from 0.8-15. In other aspects, each R¹⁶ is phenyl; X is cresyl, xylenyl, propylphenyl, or butylphenyl, one of the following divalent groups 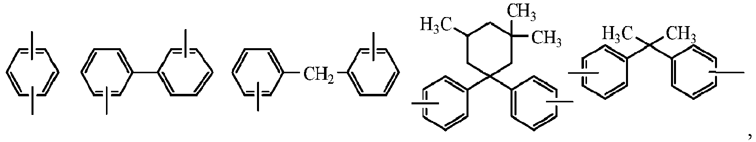 or a thereof, n is 1; and q is from 1-5, or from 1-2. Organophosphorus flame retardants of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The auxiliary flame retardant may contain phosphorous-nitrogen bonds. Phosphazenes and cyclic phosphazenes of 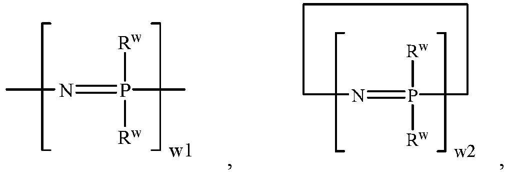 or a combination thereof, in particular may be used, wherein w1 is 3-10,000 and w2 is 3-25, preferably 3-7, and each R^{w} is independently a C₁₋₁₂ alkyl, alkenyl, alkoxy, aryl, aryloxy, or polyoxyalkylene group. In the foregoing groups at least one hydrogen atom of these groups may be substituted with a group having an N, S, O, or F atom, or an amino group. For example, each R^{w} may be a substituted or unsubstituted phenoxy, an amino, or a polyoxyalkylene group. Any given R^{w} may further be a crosslink to another phosphazene group. Exemplary crosslinks include bisphenol groups, for example bisphenol A groups. Examples include phenoxy cyclotriphosphazene, octaphenoxy cyclotetraphosphazene, decaphenoxy cyclopentaphosphazene, and the like. A combination of different phosphazenes may be used. A number of phosphazenes and their synthesis are described in H. R. Allcock, "Phosphorous-Nitrogen Compounds" Academic Press (1972), and J. E. Mark et al., "Inorganic Polymers" Prentice-Hall International, Inc. (1992).

The auxiliary flame retardant may be present from 1-21 wt%, 5-21 wt%, 5-15 wt%, 5-10 wt%, 10-21 wt%, 10-15 wt%, 15-21 wt%, 1-15 wt%, 1-10 wt%, 3-10 wt%, 1-8 wt%, 1-7 wt%, 1-5 wt%, or 1-3 wt%, each based on the total weight of the composition.

The reinforced flame retardant compositions include a compatibilizing agent. As used herein, the term "compatibilizing agent" refers to a polyfunctional compound that interacts with the poly(phenylene ether), the poly(alkylene terephthalate), and optionally, the polyamide. This interaction may be chemical (for example, grafting) and/or physical (for example, affecting the surface characteristics of the dispersed phases). In either instance, the resulting blend of poly(alkylene terephthalate) and poly(phenylene ether) exhibits improved compatibility, particularly as evidenced by enhanced impact strength, mold knit line strength, and/or tensile elongation.

Examples of compatibilizing agents that may be employed include liquid diene polymers, epoxy compounds, oxidized polyolefin wax, quinones, organosilane compounds, polyfunctional compounds, functionalized poly(phenylene ether)s, or a combination thereof. Compatibilizing agents are further described in U.S. Patent Nos. 5,132,365 to Gallucci, and 6,593,411 and 7,226,963 to Koevoets et al.

In an aspect, the compatibilizing agent comprises a polyfunctional compound. Polyfunctional compounds that may be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ₋₅OH, CₙH₂ₙ₋₇OH and CₙH₂ₙ₋₉OH, wherein n is a positive integer from 10-30); unsaturated amines resulting from replacing from replacing the -OH group(s) of the above unsaturated alcohols with -NH₂ group(s); and combinations comprising one or more of the foregoing. In some aspects, the compatibilizing agent comprises maleic anhydride, fumaric acid, citric acid, or a combination thereof.

The second type of polyfunctional compatibilizing agent has both (a) a group represented by the formula (OR) wherein R is hydrogen or an alkyl, aryl, acyl or carbonyl dioxy group and (b) at least two groups each of which may be the same or different and may be a carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula

(R^{I}O)ₘR'(COOR^{II})ₙ(CONR^{III}R^{IV})ₛ

wherein R' is a linear or branched chain, saturated aliphatic hydrocarbon having 2-20, or 2-10 carbon atoms; R^{I} is hydrogen or an alkyl, aryl, acyl, or carbonyl dioxy group having 1-10, or 1-6, or 1-4 carbon atoms; each R^{II} is independently hydrogen or an alkyl or aryl group having 1-20, or 1-10 carbon atoms; each R^{III} and R^{IV} are independently hydrogen or an alkyl or aryl group having 1-10, or 1-6, or 1-4, carbon atoms; m is equal to 1 and (n + s) is greater than or equal to 2, or equal to 2 or 3, and n and s are each greater than or equal to zero and wherein (OR^{I}) is alpha or beta to a carbonyl group and at least two carbonyl groups are separated by 2-6 carbon atoms. Obviously, R^{I}, R^{II}, R^{III}, and R^{IV} may not be aryl when the respective substituent has less than 6 carbon atoms.

Exemplary polycarboxylic acids include, for example, citric acid, malic acid, and agaricic acid, including the various commercial forms thereof, such as for example, the anhydrous and hydrated acids; and combinations comprising one or more of the foregoing. In one aspect, the compatibilizing agent comprises citric acid. Illustrative of esters useful herein include, for example, acetyl citrate, monostearyl and/or distearyl citrates, and the like. Exemplary amides include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Exemplary salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformylglutaric acid, chloroacetylsuccinic anhydride, chloroacetylsuccinic acid, trimellitic acid chloride, and chloroacetylglutaric acid. In some aspects, the compatibilizing agent comprises trimellitic anhydride acid chloride.

In an aspect, the compatibilizing agent is fumaric acid, maleic acid, maleic anhydride, citric acid, or a combination thereof. The foregoing compatibilizing agents may be added directly to the melt blend or pre-reacted with either or both of the poly(phenylene ether) and the poly(alkylene terephthalate).

The compatibilizing agent is used in an amount of 0.01-2 wt%, based on the total weight of the reinforced flame retardant composition. Within this range, the compatibilizing agent amount may be 0.01-1.5 wt%, or 0.01-1 wt%, 0.1-2 wt%, 0.1-1.5 wt%, or 0.1-1 wt%, or 0.2-0.5 wt%, each based on the total weight of the composition.

The reinforced flame retardant composition further includes a reinforcing mineral filler. Reinforcing mineral fillers include, but are not limited to, materials such as mica, clay (kaolin), talc, wollastonite, calcium carbonates (such as chalk, limestone, marble, and synthetic precipitated calcium carbonates), barium ferrite, heavy spar, and the like. Combinations of reinforcing mineral fillers may be used. Reinforcing mineral fillers may be in the form of plates or flakes having an aspect ratio (average diameter of a circle of the same area as the face of the plate to average thickness) of, e.g. 20 to 200; or needles or fibers having an aspect ratio (average length to average diameter) of, e.g., 5-500. The largest dimension of each particle (e.g., the diameter of a particle in the form of a flat plate) may be 0.1-10 micrometers (µm), or 0.5-5 µm. The reinforcing mineral fillers may have an equivalent spherical diameter (based on volume) of 0.1-5 µm, or 0.01-3 µm In a preferred aspect, the reinforcing mineral filler is talc. The reinforced flame retardant compositions may include 5-30 wt%, 5-25 wt%, 5-20 wt%, 5-15 wt%, or 5-10 wt% of the reinforcing mineral filler. In an aspect, talc may be part of a masterbatch. In an exemplary aspect, the masterbatch includes talc and a polyamide. The reinforcing mineral filler may be present from 5-40 wt%, 5-35 wt%, 5-30 wt%, 5-25 wt%, 5-20 wt%, 5-15 wt%, 5-10 wt%, 10-40 wt%, 10-35 wt%, 10-30 wt%, 10-25 wt%, 10-20 wt%, 10-15 wt%, 15-40 wt%, 15-35 wt%, 15-30 wt%, 15-25 wt%, 15-20 wt%, 20-40 wt%, 20-35 wt%, 20-30 wt%, 20-25 wt%, 25-40 wt%, 25-35 wt%, or 25-30 wt%, each based on the total weight of the composition.

The reinforcing agent of the reinforced flame retardant composition includes glass fibers. Exemplary glass fibers include those based on E, A, C, ECR, R, S, D, and NE glasses, as well as quartz. In some aspects, the glass fiber has a diameter of 2-30 µm, or 5-25 µm, or 10-15 µm. In some aspects, the length of the glass fibers before compounding is 2-7 millimeters (mm), or 3-5 mm. The glass fiber may, optionally, include a so-called adhesion promoter to improve its compatibility with the poly(alkylene terephthalate)-poly(phenylene ether) composition. Adhesion promoters include chromium complexes, silanes, titanates, zirco-aluminates, propylene maleic anhydride copolymers, reactive cellulose esters, and the like. Exemplary glass fiber is commercially available from suppliers including, for example, Owens Corning, Nippon Electric Glass, PPG, and Johns Manville. The glass fibers are present from 5-35 wt%, 5-30 wt%, 5-25 wt%, 5-20 wt%, 5-15 wt%, 5-10 wt%, 10-35 wt%, 10-30 wt%, 10-25 wt%, 10-20 wt%, 10-15 wt%, 15-35 wt%, 15-30 wt%, 15-25 wt%, 15-20 wt%, or 20-25 wt%, each based on the total weight of the composition.

The reinforced flame retardant composition includes an impact modifier. Examples of impact modifiers include styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styrene-isoprene-styrene (SIS), styrene-(ethylene-propylene)-styrene (SEPS), methyl methacrylate-butadiene-styrene (MBS), and the like. Impact modifiers may be present from 5-15 wt%, 5-10 wt%, or 6-8 wt%, each based on the total weight of the composition.

The reinforced flame retardant composition may comprise an additive composition that includes various additives ordinarily incorporated into polymer compositions of this type, with the proviso that the additive(s) are selected so as to not significantly adversely affect the desired properties of the composition, in particular heat resistance, impact, and flame retardance. Combinations of additives may be used. The additive composition may include a flow modifier, particulate filler (e.g., a particulate polytetrafluoroethylene (PTFE), glass, carbon, mineral different than the reinforcing mineral filler, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, a flame retardant different from the metal di(C₁₋₆ alkyl)phosphinate and the auxiliary flame retardant, anti-drip agent (e.g., a PTFE-encapsulated styrene-acrylonitrile copolymer (TSAN)), or a combination thereof. When present, the additive composition may comprise 0.1-10 wt%, 0.1-5 wt%, or 0.1-1 wt% of the composition, each based on the total weight of the composition.

The reinforced flame retardant compositions may be manufactured by various methods. For example, powdered polymer components (i.e., poly(phenylene ether), poly(alkylene terephthalate)s), flame retardants, or other optional components are first blended, optionally with fillers in a HENSCHEL-Mixer high speed mixer. Other low shear processes, including but not limited to hand mixing, may also accomplish this blending. The blend is then fed into the throat of a twin-screw extruder via a hopper. Additives may also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared may be one-fourth inch long or less as desired. Such pellets may be used for subsequent molding, shaping, or forming.

The reinforced flame retardant composition may be essentially free of chlorine and bromine. "Essentially free of chlorine and bromine" refers to materials produced without the intentional addition of chlorine or bromine or chlorine or bromine containing materials. It is understood however that in facilities that process multiple products a certain amount of cross contamination may occur resulting in bromine or chlorine levels typically on the parts per million by weight scale. With this understanding it may be readily appreciated that "essentially free of bromine and chlorine" may be defined as having a bromine or chlorine content of less than or equal to 100 parts per million by weight (ppm), less than or equal to 75 ppm, or less than or equal to 50 ppm. In some aspects, "essentially free of bromine and chlorine" means a total bromine and chlorine content of less than or equal to 100 parts per million by weight, or less than or equal to 75 ppm, or less than or equal to 50 ppm. When this definition is applied to the flame retardant it is based on the total weight of the flame retardant. When this definition is applied to the reinforced flame retardant composition it is based on the total parts by weight of the reinforced flame retardant composition.

In another aspect, the reinforced flame retardant composition may be essentially free of chlorine, bromine, and fluorine. "Essentially free of chlorine, bromine, and fluorine" is defined as having a bromine, chlorine, or fluorine content of less than or equal to 100 ppm, less than or equal to 75 ppm, or less than or equal to 50 ppm, based on the total parts by weight of the composition. Preferably, the reinforced flame retardant composition has a combined bromine, chlorine, and fluorine content of less than or equal to 100 ppm, less than or equal to 75 ppm, or less than or equal to 50 ppm, based on the total parts by weight of the composition.

A molded sample of the reinforced flame retardant composition determined according to ASTM D792-10 may have a specific gravity of 1.42 or less.

A molded sample of the reinforced flame retardant composition may have a flame test rating of V0, as measured according to UL-94 at a thickness of 1.5 mm, at a thickness of 1.0 mm, or at a thickness of 0.8 mm, and/or at a thickness of 0.4 mm.

A molded sample of the reinforced flame retardant composition may have a CTI of 250-399 volts (PLC=2), preferably 400-599 volts (PLC=1), more preferably 600 volts or greater (PLC=0) as determined in accordance with UL 746A.

A molded sample of the reinforced flame retardant composition may have a mean time of arc resistance (HVAR) of 420 seconds or longer (PLC=0); 360-419 seconds (PLC=1); 300-359 (PLC=2); 240-299 seconds (PLC=3); 180-239 seconds (PLC=4); 120-179 seconds (PLC=5) as determined according to ASTM D495. Preferably, a molded sample of the reinforced flame retardant composition has a mean time of arc resistance of at least 120 seconds (i.e., PLC of 5 or less).

A molded sample of the reinforced flame retardant composition may have a high voltage tracking resistance (HVTR) of 0-10 millimeters per minute (PLC=0) determined according to UL 746A.

Shaped, formed, or molded articles comprising the reinforced flame retardant compositions are also provided. The reinforced flame retardant compositions may be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In an aspect, the article is an extruded article, a molded article, pultruded article, a thermoformed article, a foamed article, a layer of a multi-layer article, a substrate for a coated article, or a substrate for a metallized article. In some aspects, the reinforced flame retardant compositions may be used in electrical components such as a molded circuit breaker or a molded circuit breaker housing. In some aspects, the reinforced flame retardant compositions may be used in a molded miniature circuit breaker or a molded miniature circuit breaker housing.

This disclosure is further illustrated by the following examples, which are nonlimiting.

### EXAMPLES

Materials used for the following examples are described in Table 1.

**Table 1.**

| Component | Description | Supplier |
|---|---|---|
| PPE | Poly(2,6-dimethyl-1,4-phenylene ether), CAS Reg. No. 25134-01-4, having an intrinsic viscosity of 0.30 deciliter per gram as measured in chloroform at 25 °C and a weight average molecular weight of 45,000 grams per mole relative to polystyrene standards; obtained as PPO 630 | SABIC |
| PBT | Poly(1,4-butylene terephthalate), CAS Reg. No. 26062-94-2, having an intrinsic viscosity of 1.2 deciliters/gram as measured at 30 °C in a 1:1 (w/w) solution of phenol: 1,1,2,2-tetrachloroethane, and having 38 meq/kg of COOH; obtained as VALOX 315\ | SABIC |
| PA66 | Polyamide 6,6, CAS Reg. No. 32131-17-2, having a weight average molecular | ASCEND |
| | weight of 68,000-75,000 atomic mass units (g/mol), in pellet form; obtained as VYDYNE 21Z | |
| SEBS | Polystyrene-poly(ethylene-butylene)-polystyrene triblock copolymer, CAS Reg. No. 66070-58-4 having a polystyrene content of 27.7-30.7 wt%; obtained as KRATON G1650 | KRATON Performance Polymers Inc. |
| FR-1 | Aluminum tris(diethyl phosphinate), CAS Reg. No. 225789-38-8; obtained as EXOLIT OP1230 | CLARIANT |
| FR-2 | Melamine polyphosphate, CAS Reg. No. 56386-64-2, obtained as MELAPUR 200 | BASF Corp |
| FR-3 | Melamine cyanurate, available as MELAPUR MC25 | BASF |
| FR-4 | Zinc Borate, available as ZB-467, average particle size = 5 µm, CAS NO: 1332-07-6 | GLCC LAUREL LLC |
| FR-5 | Magnesium oxide, CAS Reg. No. 1309-48-4; obtained as ELASTOMAG 170 | BASF Corp/ MARTIN MARIETTA |
| FR-6 | Aluminum oxide hydroxide (Boehmite), available as DISPERAL 60 | SASOL |
| FR-7 | Sodium hydrogen pyrophosphate, CAS Reg. No. 7758-16-9 | ULRICH CHEMICAL |
| GF-1 | Chopped glass fibers having a diameter of 10 micrometers, a pre-compounded length of 3.2 millimeters; obtained as CHOPVANTAGE 3540 | PPG Industries |
| GF-2 | Flat glass fibers having a length of 3.0 millimeters, a cross-sectional oblateness, 4 (=irregular cross-sectional short diameter of 7 µm, irregular cross-sectional long diameter of 28 µm); obtained as CSG 3PA-830 | Nitto Boseki Co., Ltd. |
| Talc | A masterbatch of 45 wt% talc and 55 wt% high fluidity nylon 6 (PA6); obtained as 26300-A1-000; the talc is untreated and has a median particle size of 3.2 µm | Americhem |
| Comp-1 | Citric acid, CAS Reg. No. 77-92-9 | Intercontinental |
| Comp-2 | Fumaric acid, CAS Reg. No. 110-17-8 | Ashland Chemical |

Reinforced flame retardant compositions are described in Table 2. The examples were made by blending all components with the exception of the glass fibers and talc. The blends were compounded on a Werner-Pfleiderer 30 mm co-rotating extruder, where the glass fibers and talc were fed separately downstream of the blend. The extruder temperature settings (upstream to downstream) were 240-270-290-290-290-290-290-290-280°C. The screw rotation rate was 300 revolutions per minute (rpm).

Molding of parts was performed on an 85 Van Dom injection molding machine with temperature settings of 260-260-260-260°C (from throat to nozzle) and a mold temperature of 70°C. Prior to molding the pellets were pre-dried at 110 °C for 2-4 hrs.

Flexural modulus and flexural strength were determined in accordance with ISO 178 using a multi-purpose ISO 3167 Type A specimen.

The heat distortion temperature (HDT) was determined in accordance with the ISO-75 standard with a 5.5 Joule hammer, using the flat side of 4 mm thick ISO bars and a load of 1.8 MPa (A/f).

Tensile modulus was determined according to ISO 527 using a multi-purpose ISO 3167 Type A specimen.

Tensile stress and strain at break were determined according to ISO 527 using a multi-purpose ISO 3167 Type A specimen and a testing speed of 5 millimeters/minute.

Flammability tests were performed at a sample thickness of 1.5 mm, 1.0 mm, 0.8 mm, or 0.4 mm in accordance with the UL94 standard. In some cases, a second set of 5 bars was tested to give an indication of the robustness of the rating. The ratings are described in Table 2 V-ratings were obtained for each set of 5 bars.

**Table 2.**

| | t₁ and/or t₂ | 5-bar FOT | burning drips |
|---|---|---|---|
| V0 | <10 | <50 | No |
| V1 | <30 | <250 | No |
| V2 | <30 | <250 | Yes |
| N.R. (no rating) | >30 | >250 | |

Specific gravity was determined according to ASTM D792-10.

High voltage arc resistance (HVAR) was determined according to ASTM D495, and is reported in terms of performance level categories (PLC). In accordance with ASTM D-495, performance is expressed as the number of seconds that a material resists the formation of a surface conducting path when subjected to an intermittently occurring arc of high voltage, low current characteristics. The results of testing the nominal 3 mm thickness are considered representative of the material's performance in any thickness. A mean time of arc resistance of 420 seconds or longer is assigned a PLC of 0; a mean time of arc resistance of 360-419 seconds is assigned a PLC of 1; a mean time of arc resistance of 300-359 seconds is assigned a PLC of 2; a mean time of arc resistance of 240-299 seconds is assigned a PLC of 3; a mean time of arc resistance of 180-239 seconds is assigned a PLC of 4; a mean time of arc resistance of 120-179 seconds is assigned a PLC of 5; a mean time of arc resistance of 60-119 seconds is assigned a PLC of 6; and a mean time of arc resistance of less than 60 seconds is assigned a PLC of 7. Particularly useful formulations may have a PLC of 5 or less.

Comparative tracking index (CTI) was determined in accordance with UL 746A, and is reported in terms of PLC. Performance is expressed as the voltage which causes tracking after 50 drops of 0.1% ammonium chloride solution have fallen on the material. The results of testing the nominal 3 mm thickness are considered representative of the material's performance in any thickness. A CTI of 600 Volts or greater is assigned a PLC of 0; a CTI of 400-599 Volts is assigned a PLC of 1; a CTI of 250-399 Volts is assigned a PLC or 2; a CTI of 174-249 Volts is assigned a PLC of 3; a CTI of 100-174 Volts is assigned a PLC of 4; and a CTI of less than 100 Volts is assigned a PLC of 5. Particularly useful formulations may have a PLC of 2 or less.

High voltage tracking resistance (HVTR) was determined according to UL 746A and is reported in terms of PLC. Performance was expressed as the rate in millimeters per minute (mm/min) that a tracking path may be produced on the surface of the material under standardized test conditions. Note was made if ignition of the material takes place. The results of testing the nominal 3 mm thickness are considered representative of the material's performance in any thickness. An HVTR range of 0-10 mm/min was assigned a PLC of 0; an HVTR range of 10.1-25.4 mm/min was assigned a PLC of 1; an HVTR range of 25.5-80 mm/min was assigned a PLC of 2; an HVTR range of 80.1-150 mm/min was assigned a PLC of 3; and an HVTR of greater than 150 mm/min was assigned a PLC of 4. Particularly useful formulations may preferably have a PLC of 0 (zero).

### Examples 1-7

The compositions and properties for Examples 1-7 are shown below in Table 3. The amount of each component is shown in wt%, each based on the total weight of the composition.

**Table 3.**

| Component | Units | 1* | 2* | 3* | 4* | 5 | 6* | 7* |
|---|---|---|---|---|---|---|---|---|
| PPE | wt% | 10.0 | 10.0 | 10.0 | 10.0 | 10.0 | 10.0 | 15.0 |
| PBT | wt% | 49.4 | 47.4 | 47.4 | 47.4 | 35.1 | 37.4 | 37.4 |
| PA66 | wt% | | | | | | 10.0 | 10.0 |
| SEBS | wt% | 7.0 | 7.0 | 7.0 | 7.0 | 7.0 | 7.0 | 7.0 |
| FR-1 | wt% | 9.0 | 11.0 | 11.0 | 11.0 | 11.0 | 11.0 | 11.0 |
| FR-2 | wt% | 4.0 | 4.0 | 4.0 | 4.0 | 4.0 | 4.0 | 4.0 |
| AO | wt% | 0.2 | 0.2 | 0.2 | 0.2 | 0.2 | 0.2 | 0.2 |
| Comp-1 | wt% | 0.3 | 0.3 | 0.3 | 0.3 | 0.3 | | |
| Comp-2 | wt% | | | | | | 0.3 | 0.3 |
| Talc | wt% | | | | | 22.2 | | |
| GF-1 | wt% | 20.0 | 20.0 | | 10.0 | 10.0 | 20.0 | 15.0 |
| GF-2 | wt% | | | 20.0 | 10.0 | | | |
| Pigment | wt% | 0.15 | 0.15 | 0.15 | 0.15 | 0.15 | 0.15 | 0.15 |

| Properties | | | | | | | | |
|---|---|---|---|---|---|---|---|---|
| Flex. Modulus | MPa | 6618.3 | 6536.7 | 6482.7 | 6527.7 | 5847.7 | 6912.7 | 5686.0 |
| Flex Strength | MPa | 118.9 | 113.0 | 113.0 | 114.3 | 83.4 | 101.7 | 87.5 |
| HDT, flat | °C | 187.0 | 186.8 | 185.8 | 186.6 | 172.1 | 190.2 | 171.2 |
| Tensile Modulus | MPa | 6998.6 | 6766.8 | 6580.8 | 6600.8 | 5757.2 | 7174.4 | 5780.0 |
| Tens. Stress at Break | MPa | 78.3 | 72.9 | 70.4 | 72.3 | 50.5 | 71.2 | 58.3 |
| Tens. Strain at Break | % | 1.8 | 1.7 | 1.8 | 1.9 | 1.3 | 1.3 | 1.3 |
| UL94, 1.5 mm | | V0 | V0 | V0 | V0 | V0 | V0 | V0 |
| UL94, 1.0 mm | | V0 | V0 | V0 | V0 | V0 | V0 | V0 |
| UL94, 0.8 mm | | V0 | V0 | V0 | V0 | V0 | V0 | V0 |
| UL94, 0.4 mm | | V1 | V1 | V1 | V1 | V0 | V0 | V0 |
| Specific Gravity | | 1.41 | 1.40 | 1.40 | 1.40 | 1.38 | 1.38 | 1.33 |
| HVAR | | 6 | 6 | 6 | 6 | 5 | 6 | 6 |
| CTI | | 2 | 2 | 2 | 2 | 0 | 1 | 2 |
| HVTR | | 0 | 0 | 0 | 0 | 0 | 0 | 0 |

| | | | | | | | | |
|---|---|---|---|---|---|---|---|---|
| *Comparative Example | | | | | | | | |

The data in Table 3 show that PPE-PBT glass-reinforced PPE and PBT mixtures provide a UL 94 rating of V0 at thicknesses of 0.8 mm, 1.0, and 1.5 mm, a CTI of 2 or less, and an HVTR of 0 (Examples 1-4 and 6-7). However, the HVAR ratings were greater than 5. The combination of talc and glass fibers as the reinforcing agent (Example 5) resulted in a UL 94 rating of V0 at thicknesses of 0.4 mm, 0.8 mm, 1.0 mm, and 1.5 mm, a CTI of 0, an HVTR of 0, and an HVAR of 5.

The compositions and properties for Examples 8-17 are shown below in Table 4. The amount of each component is shown in wt%, each based on the total weight of the composition.

**Table 4.**

| Component | Unit | 8* | 9* | 10* | 11* | 12 | 13* | 14* | 15* | 16* | 17a* | 17b* |
|---|---|---|---|---|---|---|---|---|---|---|---|---|
| PPE | wt% | 10.0 | 100 | 10.0 | 100 | 10.0 | 100 | 10.0 | 10.0 | 10.0 | 10.0 | 10.0 |
| PBT | wt% | 73.4 | 33.1 | 35.1 | 41.1 | 38.1 | 38.1 | 38.1 | 38.1 | 38.1 | 38.1 | 67.3 |
| SEBS | wt% | 7.0 | 7.0 | 7.0 | 7.0 | 7.0 | 7.0 | 7.0 | 7.0 | 7.0 | 7.0 | |
| FR-1 | wt% | 9.0 | 9.0 | 9.0 | 9.0 | 9.0 | 9.0 | 9.0 | 9.0 | 9.0 | 9.0 | 9.0 |
| FR-2 | wt% | | | | | 3.00 | | | | | | 3.0 |
| FR-3 | wt% | | | | | | | | 3.0 | | | |
| Comp-1 | wt% | 0.3 | 0.3 | 0.3 | 0.3 | 0.3 | 0.3 | 0.3 | 0.3 | 0.3 | 0.3 | 0.3 |
| AO | wt% | 0.2 | 0.2 | 0.2 | 0.2 | 0.2 | 0.2 | 0.2 | 0.2 | 0.2 | 0.2 | 0.2 |
| Pigment | wt% | 0.2 | 0.2 | 0.2 | 0.2 | 0.2 | 0.2 | 0.2 | 0.2 | 0.2 | 0.2 | 0.2 |
| FR-4 | wt% | | | | | | 3.0 | | | | | |
| FR-5 | wt% | | | | | | | 3.0 | | | | |
| FR-6 | wt% | | | | | | | | | 3.0 | | |
| FR-7 | wt% | | | | | | | | | | 3.0 | |
| Talc | wt% | | 40.2 | 30.2 | 22.2 | 22.2 | 22.2 | 22.2 | 22.2 | 22.2 | 22.2 | |
| GF-1 | wt% | | | 8.0 | 10.0 | 10.0 | 10.0 | 10.0 | 10.0 | 10.0 | 10.0 | 10.0 |

| Properties | | | | | | | | | | | | |
|---|---|---|---|---|---|---|---|---|---|---|---|---|
| Flex Modulus | MPa | 2314.0 | 4420.3 | 5632.3 | 5440.3 | 5530.7 | 5589.7 | X | X | 5599.0 | 5753.0 | 4635.1 |
| Flex Strength | MPa | 68.8 | 57.1 | 59.8 | 65.3 | 82.3 | 45.6 | X | X | 58.2 | 79.6 | 99.7 |
| HDT | °C | 76.6 | 121.7 | 184.4 | 187.9 | 177.2 | 178.1 | X | X | 188.9 | 172.6 | 75.0 |
| Tens. Modulus | MPa | 2636.2 | 5051.2 | 6477.0 | 6285.6 | 6419.8 | 6397.6 | X | X | 6592.8 | 6390.8 | 4861.0 |
| Tens. Stress at Break | MPa | 39.5 | 20.6 | 34.3 | 38.5 | 49.8 | 24.8 | X | X | 33.2 | 50.6 | 54.4 |
| Tens. Strain at Break | % | 1.9 | 0.4 | 0.6 | 0.7 | 1.1 | 0.4 | X | X | 0.6 | 1.1 | 2.0 |
| UL94, 1.5 mm | | V2 | V1 | V1 | V1 | V0 | NR | X | NR | V1 | NR | V1 |
| UL94, 0.8 mm | | V2 | V1 | NR | NR | V1 | X | X | X | V1 | NR | NR |
| Specific Gravity | | 1.25 | 1.33 | 1.37 | 1.37 | 1.37 | 1.38 | X | X | 1.39 | 1.38 | 1.37 |
| HVAR | | 5 | 5 | 5 | 5 | 5 | X | X | X | 5 | 5 | 5 |
| CTI | | 0 | 1 | 0 | 1 | 0 | X | X | X | 0 | 1 | 3 |
| HVTR | | 0 | 0 | 0 | 0 | 0 | X | X | X | 0 | 0 | 0 |

| | | | | | | | | | | | | |
|---|---|---|---|---|---|---|---|---|---|---|---|---|
| *Comparative Example | | | | | | | | | | | | |

In Table 4, some testing samples could not be prepared from certain compositions (as indicated by an "X"). This was due to poor processability in the extrusion process.

Comparative Examples 8-11 show that when FR-1 was used alone, that a loading of 9 wt% was insufficient to provide a UL 94 rating of V0 at thicknesses of 1.5 mm and/or 0.8 mm. Combinations of 9 wt% FR-1 with: 3 wt% FR-3 (Comparative Example 15), 3 wt% FR-4 (Comparative Example 13), 3 wt% FR-5 (Comparative Example 14), 3 wt% FR-6 (Comparative Example 16), and 3 wt% FR-7 (Comparative Example 17a) failed to improve the UL 94 ratings at thicknesses of 0.8 mm and 1.5 mm, although the CTI and HVTR values were in a desired range. Example 12, which had a combination of FR-1 (9 wt%) and FR-2 (3 wt%) resulted in UL 94 rating of V1 and V0 at thicknesses of 0.8 mm and 1.5 mm. Comparative Example 17b shows that the combination of FR-1 and FR-2 wherein SEBS and Talc were absent resulted in a CTI value outside of the desired range (i.e., CTI = 3).

The compositions and properties for Examples 18-24 are shown below in Table 5. The amount of each component is shown in wt%, each based on the total weight of the composition.

**Table 5.**

| Component | Units | 18* | 19* | 20* | 21* | 22* | 23* | 24* |
|---|---|---|---|---|---|---|---|---|
| PPE | wt% | 10.0 | 10.0 | 10.0 | 10.0 | 10.0 | 10.0 | 10.0 |
| PBT | wt% | 62.4 | 50.1 | 55.4 | 37.1 | 35.1 | 37.1 | 39.1 |
| SEBS | wt% | 7.0 | 7.0 | 7.0 | 7.0 | 7.0 | 7.0 | 7.0 |
| FR-2 | wt% | | | 7.0 | 7.0 | 7.0 | 5.0 | 3.0 |
| Comp-1 | wt% | 0.3 | 0.3 | 0.3 | 0.3 | 0.3 | 0.3 | 0.3 |
| AO | wt% | 0.2 | 0.2 | 0.2 | 0.2 | 0.2 | 0.2 | 0.2 |
| Pigment | wt% | 0.2 | 0.2 | 0.2 | 0.2 | 0.2 | 0.2 | 0.2 |
| Talc | wt% | | 22.2 | | 30.2 | 30.2 | 30.2 | 30.2 |
| GF-1 | wt% | 20.0 | 10.0 | 20.0 | 8.0 | 10.0 | 10.0 | 10.0 |

| Properties | | | | | | | | |
|---|---|---|---|---|---|---|---|---|
| Flex. Modulus | MPa | 6260.0 | 5580.0 | 6797.0 | 6125.7 | 6754.7 | 6584.0 | 6438.7 |
| Flex. Strength | MPa | 34.0 | 10.6 | 65.6 | 16.7 | 46.5 | 55.4 | 47.2 |
| HDT, flat | °C | 195.9 | 184.2 | 201.1 | 188.2 | 191.2 | 189.1 | 192.1 |
| Tensile Modulus | MPa | 6256.0 | 5571.6 | 7077.6 | 6056.4 | 6683.6 | 6494.6 | 6445.4 |
| Tens. Stress at Break | MPa | 95.3 | 67.3 | 91.0 | 63.4 | 65.6 | 67.3 | 69.0 |
| Tens. Strain at Break | % | 2.4 | 1.8 | 1.8 | 1.5 | 1.4 | 1.5 | 1.6 |
| UL94, 1.5 mm | | NR | NR | NR | NR | NR | NR | NR |
| UL94, 0.8 mm | | NR | NR | NR | NR | NR | NR | NR |
| Specific Gravity | | 1.38 | 1.37 | 1.41 | 1.39 | 1.41 | 1.40 | 1.39 |
| HVAR | | 6 | 5 | 5 | 4 | 5 | 5 | 4 |
| CTI | | 2 | 2 | 2 | 1 | 1 | 1 | 1 |
| HVTR | | 2 | 0 | 0 | 2 | 3 | 3 | 3 |

| | | | | | | | | |
|---|---|---|---|---|---|---|---|---|
| *Comparative Example | | | | | | | | |

Table 5 shows that molded samples of compositions having FR-2 alone, wherein FR-1 was absent, loading of FR-2 at 3-7 wt% was insufficient to provide a UL 94 rating of V0 at thicknesses of 0.8 mm and 1.5 mm (Comparative Examples 18-24).

The compositions and properties for Examples 25-30 are shown below in Table 6. The amount of each component is shown in wt%, each based on the total weight of the composition.

**Table 6.**

| Component | Units | 25* | 26* | 27* | 28* | 29* | 30* |
|---|---|---|---|---|---|---|---|
| PPE | wt% | 10.0 | 12.0 | 10.0 | 12.0 | 10.0 | 10.0 |
| PBT | wt% | 35.1 | 39.1 | 35.1 | 39.1 | 37.1 | 75.4 |
| SEBS | wt% | 7.0 | 7.0 | 7.0 | 7.0 | 7.0 | 7.0 |
| FR-1 | wt% | 4.0 | 4.0 | 4.0 | 4.0 | | |
| FR-2 | wt% | 3.0 | 4.0 | | | | 7.0 |
| FR-3 | wt% | | | 3.0 | 4.0 | 5.0 | |
| Comp-1 | wt% | 0.3 | 0.3 | 0.3 | 0.3 | 0.3 | 0.3 |
| AO | wt% | 0.2 | 0.2 | 0.2 | 0.2 | 0.2 | 0.2 |
| Pigment | wt% | 0.2 | 0.2 | 0.2 | 0.2 | 0.2 | 0.2 |
| Talc | wt% | 30.2 | 23.2 | 30.2 | 23.2 | 30.2 | |
| GF-1 | wt% | 10.0 | 10.0 | 10.0 | 10.0 | 10.0 | |
| Flex. Modulus | MPa | 6463.0 | 6040.3 | 6438.0 | 5882.0 | 6356.7 | 2482.3 |
| Flex. Strength | MPa | 70.1 | 47.6 | 61.6 | 54.0 | 97.1 | 30.6 |
| HDT, 1.8 | °C | 191.1 | 191.0 | 198.5 | 196.6 | 189.5 | 75.0 |
| Tens. Modulus | MPa | 6312.2 | 5938.8 | 6370.4 | 5895.0 | 6258.8 | 2464.2 |
| Tens. Stress at Break | MPa | 56.0 | 56.4 | 49.1 | 45.7 | 63.1 | 48.6 |
| Tens. Strain at Break | % | 1.2 | 1.3 | 1.0 | 1.0 | 1.5 | 3.2 |
| UL94, 1.5 mm | | NR | NR | NR | NR | NR | NR |
| UL94, 0.8 mm | | NR | NR | NR | NR | NR | NR |
| Specific Gravity | | 1.39 | 1.37 | 1.39 | 1.37 | 1.39 | 1.28 |
| HVAR | | 4 | 4 | 5 | 5 | 4 | 5 |
| CTI | | 0 | 1 | 1 | 1 | 1 | 2 |
| HVTR | | 2 | 3 | 3 | 3 | 3 | 4 |

| | | | | | | | |
|---|---|---|---|---|---|---|---|
| *Comparative Example | | | | | | | |

Comparative Examples 25-26 show that for flame retardant compositions wherein both FR-1 and FR-2 are present, the combined loadings of 7 wt% and 8 wt%, respectively, were each insufficient to provide a UL 94 rating of V0 at thicknesses of 0.8 mm and 1.5 mm. Combinations of FR-1 with FR-3 at loading ranging from 7-8 wt% failed to improve the UL 94 ratings at thicknesses of 0.8 mm and 1.5 mm (Comparative Examples 27-28).

Regarding Tables 3-6, all of the disclosed compositions (Examples 1-30) are useful for miniature circuit breaker housing applications, each having a specific gravity of less than or equal to 1.42. Advantageously, in addition to a specific gravity of less than or equal to 1.42, the molded compositions of Examples 5 and 12, provided desirable flame retardancy, CTI, HVAR, and HVTR values. Compositions having this combination of properties: CTI (PLC = 0), HVAR (PLC ≤ 5), and HVTR (PLC = 0) are especially useful for electrical applications such as miniature circuit breakers.

This disclosure further encompasses the following aspects.

Aspect 1: A reinforced flame retardant composition comprising: 30-80 wt% of a polymer component comprising 25-65 wt% of a poly(alkylene terephthalate); 5-25 wt% of a poly(phenylene ether); optionally, 5-35 wt% of a polyamide; 5-30 wt% of a reinforcing mineral filler, preferably talc, 5-35 wt% of glass fibers; 4-25 wt% of a flame retardant component comprising: a metal di(C₁₋₆ alkyl)phosphinate, and an auxiliary flame retardant comprising a phosphate, a phosphite, a phosphonate, a phosphinate different from the metal di(C₁₋₆ alkyl)phosphinate, a phosphine oxide, a phosphine, a phosphazene, melamine polyphosphate, melamine cyanurate, melamine pyrophosphate, melamine phosphate, a metal hydroxide, a metal borate, a metal oxide, a metal oxide hydroxide, or a combination thereof, preferably melamine polyphosphate; 0.01-2 wt% of a compatibilizing agent; 5-15 wt% of an impact modifier; optionally, 0.1-10 wt% of an additive composition; each based on the total weight of the composition, wherein a molded sample of the composition has a UL94 rating of V0 at a thickness of 1.5 millimeter, a UL94 rating of V0 at a thickness of 1.0 millimeter, at a UL94 rating of V0 thickness of 0.8 millimeter, at a UL94 rating of V0 thickness of 0.4 millimeter, or a combination thereof; and a comparative tracking index of 250-399 volts, preferably 400-599 volts, more preferably 600 volts or greater as determined in accordance with UL 746A, a mean time of arc resistance of at least 120 seconds as determined according to ASTM D495, or a combination thereof.

Aspect 2: The reinforced flame retardant composition of aspect 1, wherein the composition exhibits a high voltage tracking resistance of 0-10 millimeters per minute determined according to UL 746A.

Aspect 3: The reinforced flame retardant composition of any one of the preceding aspects, wherein the poly(alkylene terephthalate) comprises a poly((C₁₋₈ alkylene) terephthalate), preferably wherein the poly((C₁₋₈ alkylene) terephthalate) is a poly(ethylene terephthalate), a poly(butylene terephthalate), or a combination thereof, more preferably a poly(butylene terephthalate).

Aspect 4: The reinforced flame retardant composition of any one of the preceding aspects, wherein the polyamide is present and comprises nylon-6, nylon-6,6, nylon-4, nylon-4,6, nylon-12, nylon-6,10, nylon-6,9, nylon-6,12, nylon-9T, nylon-6,6 nylon-6, or a combination thereof.

Aspect 5: The reinforced flame retardant composition of any one of the preceding aspects, wherein the poly(phenylene ether) is poly(2,6-dimethyl-1,4-phenylene ether).

Aspect 6: The reinforced flame retardant composition of any one of the preceding aspects, wherein the reinforcing mineral filler is talc and the polyamide is present and comprises nylon-6, nylon-6,6, or a combination thereof.

Aspect 7: The reinforced flame retardant composition of any one of the preceding aspects, wherein the metal di(C₁₋₆ alkyl)phosphinate comprises a metal di(C₁₋₃ alkyl)phosphinate.

Aspect 8: The reinforced flame retardant composition of any one of the preceding aspects, wherein the flame retardant component comprises 4-24 wt% of the metal di(C₁₋₆ alkyl)phosphinate and 1-21 wt% of the auxiliary flame retardant comprising melamine polyphosphate, melamine cyanurate, melamine pyrophosphate, melamine phosphate a metal hydroxide, a metal borate, a metal oxide, a metal oxide hydroxide, or a combination thereof, preferably melamine polyphosphate.

Aspect 9: The reinforced flame retardant composition of any one of the preceding aspects, wherein the additive composition is present and comprises a flow modifier, an antioxidant, a heat stabilizer, a light stabilizer, an ultraviolet light stabilizer, an ultraviolet absorbing additive, a plasticizer, a lubricant, a release agent, an antistatic agent, an anti-fog agent, an antimicrobial agent, a colorant, a surface effect additive, a radiation stabilizer, a flame retardant different from the metal di(C₁₋₆ alkyl)phosphinate and the auxiliary flame retardant, an anti-drip agent, or a combination thereof.

Aspect 10: The reinforced flame retardant composition of any one of the preceding aspects, wherein the impact modifier comprises styrene-butadiene-styrene, styrene-butadiene rubber, styrene-ethylene-butadiene-styrene, acrylonitrile-butadiene-styrene, acrylonitrile-ethylene-propylene-diene-styrene, styrene-isoprene-styrene, methyl methacrylate-butadiene-styrene, styrene-acrylonitrile, or a combination thereof.

Aspect 11: The reinforced flame retardant composition of any one of the preceding aspects, comprising: 35-65 wt% of the polymer component comprising 5-15 wt% of the poly(2,6-dimethyl-1,4-phenylene) ether; and 30-50 wt% of the poly(butylene terephthalate); optionally, 5-20 wt% of polyamide; 5-15 wt% talc; 5-15 wt% glass fibers; and 5-23 wt% of the flame retardant component comprising 4-15 wt% of aluminum diethylphosphinate; and 1-8 wt% of melamine polyphosphate; 0.1-1.5 wt% of a compatibilizing agent comprising fumaric acid, maleic acid, maleic anhydride, citric acid, or a combination thereof; 6-8 wt% of styrene-ethylene-butadiene-styrene as the impact modifier; and 0.1-5 wt% of the additive composition, wherein each is based on the total weight of the composition.

Aspect 12: A method for the manufacture of the reinforced flame retardant composition of any one of the preceding aspects, the method comprising melt blending the components of the composition.

Aspect 13: An article comprising the reinforced flame retardant composition of any one of the preceding aspects.

Aspect 14: The article of aspect 13, wherein the article is an injection molded article, preferably an electrical component, more preferably a molded circuit breaker or a molded circuit breaker housing.

The compositions, methods, and articles may alternatively comprise, consist of, or consist essentially of, any appropriate materials, steps, or components herein disclosed. The compositions, methods, and articles may additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or a combination thereof 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects," "an aspect," and so forth, means that a particular element described in connection with the aspect is included in at least one aspect described herein, and may or may not be present in other aspects. In addition, it is to be understood that the described elements may be combined in any useful manner in the various aspects. A "combination thereof' is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. However, if a term in the present application contradicts or conflicts with a term in the cited reference, the term from the present application takes precedence over the conflicting term from the reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl," whether used by itself, or as a prefix, suffix, or fragment of another term, refers to a residue that contains only carbon and hydrogen. The residue may be aliphatic or aromatic, straight-chain, cyclic, bicyclic, branched, saturated, or unsaturated. It may also contain a combination of aliphatic, aromatic, straight chain, cyclic, bicyclic, branched, saturated, and unsaturated hydrocarbon moieties. However, when the hydrocarbyl residue is described as substituted, it may, optionally, contain heteroatoms in addition to the carbon and hydrogen members of the substituent residue. Thus, when specifically described as substituted, the hydrocarbyl residue may also contain one or more carbonyl groups, amino groups, hydroxyl groups, or the like, or it may contain heteroatoms within the backbone of the hydrocarbyl residue.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups may be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that may each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A reinforced flame retardant composition comprising:
30-80 wt% of a polymer component comprising
25-65 wt% of a poly(alkylene terephthalate);
5-25 wt% of a poly(phenylene ether); and
optionally, 5-35 wt% of a polyamide;
5-30 wt% of a reinforcing mineral filler, preferably talc,
5-35 wt% of glass fibers;
4-25 wt% of a flame retardant component comprising
a metal di(C₁₋₆ alkyl)phosphinate; and
an auxiliary flame retardant comprising a phosphate, a phosphite, a phosphonate, a phosphinate different from the metal di(C₁₋₆ alkyl)phosphinate, a phosphine oxide, a phosphine, a phosphazene, melamine polyphosphate, melamine cyanurate, melamine pyrophosphate, melamine phosphate, a metal hydroxide, a metal borate, a metal oxide, a metal oxide hydroxide, or a combination thereof, preferably melamine polyphosphate;
0.01-2 wt% of a compatibilizing agent;
5-15 wt% of an impact modifier;
optionally, 0.1-10 wt% of an additive composition;
each based on the total weight of the composition,
wherein a molded sample of the composition has a UL94 rating of V0 at a thickness of 1.5 millimeter, a UL94 rating of V0 at a thickness of 1.0 millimeter, a UL94 rating of V0 at a thickness of 0.8 millimeter, a UL94 rating of V0 at a thickness of 0.4 millimeter, or a combination thereof; and
wherein the composition exhibits:
a comparative tracking index of 250-399 volts, preferably 400-599 volts, more preferably 600 volts or greater as determined in accordance with UL 746A,
a mean time of arc resistance of at least 120 seconds as determined according to ASTM D495,
or a combination thereof.

2. The reinforced flame retardant composition of claim 1, wherein the composition exhibits:
a high voltage tracking resistance of 0-10 millimeters per minute determined according to UL 746.

3. The reinforced flame retardant composition of any one of the preceding claims, wherein the poly(alkylene terephthalate) comprises a poly((C₁₋₈ alkylene) terephthalate), preferably wherein the poly((C₁₋₈ alkylene) terephthalate) is a poly(ethylene terephthalate), a poly(butylene terephthalate), or a combination thereof, more preferably a poly(butylene terephthalate).

4. The reinforced flame retardant composition of any one of the preceding claims, wherein the polyamide is present and comprises nylon-6, nylon-6,6, nylon-4, nylon-4,6, nylon-12, nylon-6,10, nylon-6,9, nylon-6,12, nylon-9T, nylon-6,6 nylon-6, or a combination thereof.

5. The reinforced flame retardant composition of any one of the preceding claims, wherein the poly(phenylene ether) is poly(2,6-dimethyl-1,4-phenylene ether).

6. The reinforced flame retardant composition of any one of the preceding claims, wherein the reinforcing mineral filler comprises talc and the polyamide is present and comprises nylon-6, nylon-6,6, or a combination thereof.

7. The reinforced flame retardant composition of any one of the preceding claims, wherein the metal di(C₁₋₆ alkyl)phosphinate comprises a metal di(C₁₋₃ alkyl)phosphinate.

8. The reinforced flame retardant composition of any one of the preceding claims, wherein flam retardant component comprises 4-24 wt% of the metal di(C₁₋₆ alkyl)phosphinate and 1-21 wt% of the auxiliary flame retardant comprising melamine polyphosphate, melamine cyanurate, melamine pyrophosphate, melamine phosphate a metal hydroxide, a metal borate, a metal oxide, a metal oxide hydroxide, or a combination thereof, preferably melamine polyphosphate.

9. The reinforced flame retardant composition of any one of the preceding claims, wherein the additive composition is present and comprises a flow modifier, an antioxidant, a heat stabilizer, a light stabilizer, an ultraviolet light stabilizer, an ultraviolet absorbing additive, a plasticizer, a lubricant, a release agent, an antistatic agent, an anti-fog agent, an antimicrobial agent, a colorant, a surface effect additive, a radiation stabilizer, a flame retardant different from the metal di(C₁₋₆ alkyl)phosphinate and the auxiliary flame retardant, an anti-drip agent, or a combination thereof.

10. The reinforced flame retardant composition of any one of the preceding claims, wherein the impact modifier comprises styrene-butadiene-styrene, styrene-butadiene rubber, styrene-ethylene-butadiene-styrene, acrylonitrile-butadiene-styrene, acrylonitrile-ethylene-propylene-diene-styrene, styrene-isoprene-styrene, methyl methacrylate-butadiene-styrene, styrene-acrylonitrile, or a combination thereof.

11. The reinforced flame retardant composition of any one of the preceding claims, comprising:
35-65 wt% of the polymer component comprising
5-15 wt% of the poly(2,6-dimethyl-1,4-phenylene) ether; and
30-50 wt% of the poly(butylene terephthalate);
optionally, 5-20 wt% of polyamide;
5-15 wt% talc;
5-15 wt% glass fibers; and
5-23 wt% of the flame retardant component comprising
4-15 wt% of aluminum diethylphosphinate; and
1-8 wt% of melamine polyphosphate;
0.1-1.5 wt% of a compatibilizing agent comprising fumaric acid, maleic acid, maleic anhydride, citric acid, or a combination thereof;
6-8 wt% of styrene-ethylene-butadiene-styrene as the impact modifier; and
0.1-5 wt% of the additive composition,
wherein each is based on the total weight of the composition.

12. A method for the manufacture of the reinforced flame retardant composition of any one of the preceding claims, the method comprising melt blending the components of the composition.

13. An article comprising the reinforced flame retardant composition of any one of claims 1-11.

14. The article of claim 13, wherein the article is an injection molded article, preferably an electrical component, more preferably a molded circuit breaker or a molded circuit breaker housing.

## Patentansprüche

1. Verstärkte flammhemmende Zusammensetzung, umfassend: zu 30-80 Gew.-% eine Polymerkomponente, umfassend
zu 25-65 Gew.-% ein Poly(alkylenterephthalat);
zu 5-25 Gew.-% ein Poly(phenylenether); und
optional, zu 5-35 Gew.-% ein Polyamid;
zu 5-30 Gew.-% einen verstärkenden mineralischen Füllstoff, vorzugsweise Talk,
zu 5-35 Gew.-% Glasfasern;
zu 4-25 Gew.-% eine flammhemmende Komponente, umfassend
ein Metalldi(C₁₋₆-alkyl)phosphinat; und
einen Hilfsflammhemmer, umfassend ein Phosphat, ein Phosphit, ein Phosphonat, ein Phosphinat, das von dem Metalldi(C₁₋₆-alkyl)phosphinat verschieden ist, ein Phosphinoxid, ein Phosphin, ein Phosphazen, Melaminpolyphosphat, Melamincyanurat, Melaminpyrophosphat, Melaminphosphat, ein Metallhydroxid, ein Metallborat, ein Metalloxid, ein Metalloxidhydroxid oder eine Kombination davon, vorzugsweise Melaminpolyphosphat;
zu 0,01-2 Gew.-% ein Kompatibilisierungsmittel;
zu 5-15 Gew.-% einen Schlagzähmodifikator;
optional, zu 0,1-10 Gew.-% eine Additivzusammensetzung;
jedes basierend auf dem Gesamtgewicht der Zusammensetzung,
wobei eine geformte Probe der Zusammensetzung eine UL94-Bewertung von VO bei einer Dicke von 1,5 Millimeter, eine UL94-Bewertung von VO bei einer Dicke von 1,0 Millimeter, eine UL94-Bewertung von VO bei einer Dicke von 0,8 Millimeter, eine UL94-Bewertung von VO bei einer Dicke von 0,4 Millimeter oder eine Kombination davon aufweist; und
wobei die Zusammensetzung zeigt:
eine Vergleichszahl einer Kriechwegbildung von 250-399 Volt, vorzugsweise 400-599 Volt, mehr bevorzugt 600 Volt oder größer, wie gemäß UL 746A bestimmt,
eine mittlere Zeit einer Lichtbogenfestigkeit von mindestens 120 Sekunden, wie gemäß ASTMD495 bestimmt,
oder eine Kombination davon.

2. Verstärkte flammhemmende Zusammensetzung nach Anspruch 1, wobei die Zusammensetzung zeigt:
eine Hochspannungskriechstromfestigkeit von 0-10 Millimetern pro Minute, gemäß UL 746 bestimmt.

3. Verstärkte flammhemmende Zusammensetzung nach einem der vorstehenden Ansprüche, wobei das Poly(alkylenterephthalat) ein Poly((C₁₋₈-alkylen)terephthalat) umfasst, vorzugsweise wobei das Poly((C₁₋₈-alkylen)terephthalat) ein Poly(ethylenterephthalat), ein Poly(butylenterephthalat) oder eine Kombination davon, mehr bevorzugt ein Poly(butylenterephthalat) ist.

4. Verstärkte flammhemmende Zusammensetzung nach einem der vorstehenden Ansprüche, wobei das Polyamid vorhanden ist und Nylon-6, Nylon-6,6, Nylon-4, Nylon-4,6, Nylon-12, Nylon-6,10, Nylon-6,9, Nylon-6,12, Nylon-9T, Nylon-6,6-nylon-6 oder eine Kombination davon umfasst.

5. Verstärkte flammhemmende Zusammensetzung nach einem der vorstehenden Ansprüche, wobei das Poly(phenylenether) Poly(2,6-dimethyl-1,4-phenylenether) ist.

6. Verstärkte flammhemmende Zusammensetzung nach einem der vorstehenden Ansprüche, wobei der verstärkende mineralische Füllstoff Talk umfasst und das Polyamid vorhanden ist und Nylon-6, Nylon-6,6 oder eine Kombination davon umfasst.

7. Verstärkte flammhemmende Zusammensetzung nach einem der vorstehenden Ansprüche, wobei das Metalldi(C₁₋₆-alkyl)phosphinat ein Metalldi(C₁₋₃-alkyl)phosphinat umfasst.

8. Verstärkte flammhemmende Zusammensetzung nach einem der vorstehenden Ansprüche, wobei die flammhemmende Komponente zu 4-24 Gew.-% das Metalldi(C₁₋₆-alkyl)phosphinat und zu 1-21 Gew.-% den Hilfsflammhemmer, umfassend Melaminpolyphosphat, Melamincyanurat, Melaminpyrophosphat, Melaminphosphat, ein Metallhydroxid, ein Metallborat, ein Metalloxid, ein Metalloxidhydroxid oder eine Kombination davon, vorzugsweise Melaminpolyphosphat, umfasst.

9. Verstärkte flammhemmende Zusammensetzung nach einem der vorstehenden Ansprüche, wobei die Additivzusammensetzung vorhanden ist und einen Flussmodifikator, ein Antioxidans, einen Wärmestabilisator, einen Lichtstabilisator, einen Ultraviolettlichtstabilisator, ein ultraviolettabsorbierendes Additiv, einen Weichmacher, ein Schmiermittel, ein Trennmittel, ein Antistatikmittel, ein Antibeschlagmittel, ein antimikrobielles Mittel, ein Färbemittel, ein Oberflächeneffektadditiv, einen Strahlungsstabilisator, einen Flammhemmer, der von dem Metalldi(C₁₋₆-alkyl)phosphinat und dem Hilfsflammhemmer verschieden ist, ein Antitropfmittel oder eine Kombination davon umfasst.

10. Verstärkte flammhemmende Zusammensetzung nach einem der vorstehenden Ansprüche, wobei der Schlagzähmodifikator Styrol-Butadien-Styrol, Styrol-Butadien-Kautschuk, Styrol-Ethylen-Butadien-Styrol, Acrylnitril-Butadien-Styrol, Acrylnitril-Ethylen-Propylen-Dien-Styrol, Styrol-Isopren-Styrol, Methylmethacrylat-Butadien-Styrol, Styrol-Acrylnitril oder eine Kombination davon umfasst.

11. Verstärkte flammhemmende Zusammensetzung nach einem der vorstehenden Ansprüche, umfassend:
zu 35-65 Gew.-% die Polymerkomponente, umfassend
zu 5-15 Gew.-% das Poly(2,6-dimethyl-1,4-phenylen)ether; und
zu 30-50 Gew.-% das Poly(butylenterephthalat);
optional, zu 5-20 Gew.-% Polyamid;
zu 5-15 Gew.-% Talk;
zu 5-15 Gew.-% Glasfasern; und
zu 5-23 Gew.-% die flammhemmenden Komponente, umfassend zu 4-15 Gew.-% Aluminiumdiethylphosphinat; und
zu 1-8 Gew.-% Melaminpolyphosphat;
zu 0,1-1,5 Gew.-% ein Kompatibilisierungsmittel, umfassend Fumarsäure, Maleinsäure, Maleinsäureanhydrid, Citronensäure oder eine Kombination davon;
zu 6-8 Gew.-% Styrol-Ethylen-Butadien-Styrol als den Schlagzähmodifikator; und
zu 0,1-5 Gew.-% die Additivzusammensetzung,
wobei jedes auf dem Gesamtgewicht der Zusammensetzung basiert.

12. Verfahren für die Herstellung der verstärkten flammhemmenden Zusammensetzung nach einem der vorstehenden Ansprüche, das Verfahren umfassend ein Schmelzmischen der Komponenten der Zusammensetzung.

13. Artikel, umfassend die verstärkte flammhemmende Zusammensetzung nach einem der Ansprüche 1 bis 11.

14. Artikel nach Anspruch 13, wobei der Artikel ein spritzgussgeformter Artikel, vorzugsweise eine elektrische Komponente, mehr bevorzugt ein geformter Leistungsschalter oder ein geformtes Leistungsschaltergehäuse ist.

## Revendications

1. Une composition ignifuge renforcée comprenant :
30-80 % en poids d'un composant polymère comprenant
25-65 % en poids d'un poly(téréphtalate d'alkylène) ;
5-25 % en poids d'un poly(éther de phénylène) ; et
facultativement, 5-35 % en poids d'un polyamide ;
5-30 % en poids d'une charge minérale de renfort, de préférence du talc,
5-35 % en poids de fibres de verre ;
4-25 % en poids d'un composant ignifuge comprenant
un di(C₁₋₆ alkyl)phosphinate métallique et
un retardateur de flame auxiliaire comprenant un phosphate, un phosphite, un phosphonate, un phosphinate différent du di(C₁₋₆ alkyl)phosphinate métallique, un oxyde de phosphine, une phosphine, un phosphazène, du polyphosphate de mélamine, du cyanurate de mélamine, du pyrophosphate de mélamine, du phosphate de mélamine, un hydroxymétalliquelique, un borate métallique, un oxymétalliquelique, un hydroxyde d'oxymétalliquelique, ou une combinaison de ceux-ci, de préférence du polyphosphate de mélamine ;
0,01-2 % en poids d'un agent de compatibilité ;
5-15 % en poids d'un modificateur d'impact ;
facultativement, 0,1-10 % en poids d'une composition d'additifs ;
chacun basé sur le poids total de la composition,
dans laquelle un échantillon moulé de la composition a un classement UL94 de V0 à une épaisseur de 1,5 millimètre, une classe UL94 de V0 à une épaisseur de 1,0 millimètre, une classe UL94 de V0 à une épaisseur de 0,8 millimètres, une classe UL94 de V0 à une épaisseur de 0,4 millimètre, ou une combinaison de ceux-ci ; et
dans lequel la composition présente :
un indice comparatif de cheminement de 250-399 volts, de préférence de 400-599 volts, plus préférentiellement de 600 volts ou plus, tel que déterminé conformément à la norme UL 746A,
un temps moyen de résistance à l'arc d'au moins 120 secondes, tel que déterminé conformément à la norme ASTMD495,
ou une combinaison de ceux-ci.

2. La composition ignifuge renforcée selon la revendication 1, dans laquelle la composition présente :
une résistance au cheminement sous haute tension de 0 à 10 millimètres par minute, déterminée conformément à la norme UL 746.

3. La composition ignifuge renforcée selon l'une quelconque des revendications précédentes, dans laquelle le poly(téréphtalate d'alkylène) comprend un poly(téréphtalate de (C₁₋₈ alkylène)), de préférence dans lequel le poly(téréphtalate de (C₁₋₈ alkylène)) est un poly(téréphtalate d'éthylène), un poly(téréphtalate de butylène), ou une combinaison de ceux-ci, plus préférentiellement un poly(téréphtalate de butylène).

4. La composition ignifuge renforcée selon l'une quelconque des revendications précédentes, dans laquelle le polyamide est présent et comprend du nylon-6, du nylon-6,6, du nylon-4, du nylon-4,6, du nylon-12, du nylon-6,10, du nylon-6,9, du nylon-6,12, du nylon-9T, du nylon-6,6 nylon-6, ou une combinaison de ceux-ci.

5. La composition ignifuge renforcée selon l'une quelconque des revendications précédentes, dans laquelle le poly(éther de phénylène) est du poly(éther de 2,6-diméthyl-1,4-phénylène).

6. La composition ignifuge renforcée selon l'une quelconque des revendications précédentes, dans laquelle la charge minérale de renfort comprend du talc et le polyamide est présent et comprend du nylon-6, du nylon-6,6 ou une combinaison de ceux-ci.

7. La composition ignifuge renforcée selon l'une quelconque des revendications précédentes, dans laquelle le di(C₁₋₆ alkyl)phosphinate métallique comprend un di(C₁₋₃ alkyl)phosphinate métallique.

8. La composition ignifuge renforcée selon l'une quelconque des revendications précédentes, dans laquelle le composant ignifuge comprend 4-24 % en poids de di(C₁₋₆ alkyl)phosphinate métallique et 1-21 % en poids du retardateur de flame auxiliaire comprenant du polyphosphate de mélamine, du cyanurate de mélamine, du pyrophosphate de mélamine, du phosphate de mélamine, un hydroxyde métallique, un borate métallique, un oxyde métallique, un hydroxyde d'oxyde métallique, ou une combinaison de ceux-ci, de préférence du polyphosphate de mélamine.

9. La composition ignifuge renforcée selon l'une quelconque des revendications précédentes, dans laquelle la composition d'additifs est présente et comprend un modificateur d'écoulement, un antioxydant, un stabilisant thermique, un photostabilisant, un stabilisant de lumière ultraviolette, un additif absorbant les ultraviolets, un plastifiant, un lubrifiant, un agent de démoulage, un agent antistatique, un agent antibuée, un agent antimicrobien, un colorant, un additif à effet de surface, un stabilisant de rayonnement, un retardateur de flamme différent du di(C₁₋₆ alkyl)phosphinate métallique et du retardateur de flamme auxiliaire, un agent anti-goutte, ou une combinaison de ceux-ci.

10. Composition ignifuge renforcée selon l'une quelconque des revendications précédentes, dans laquelle le modificateur d'impact comprend du styrène-butadiène-styrène, du caoutchouc styrène-butadiène, du styrène-éthylène-butadiène-styrène, de l'acrylonitrille-butadiène-styrène, de l'acrylonitrile-éthylène-propylène-diène-styrène, du styrène-isoprène-styrène, du méthacrylate de méthyle-butadiène-styrène, du styrène-acrylonitrile, ou une combinaison de ceux-ci.

11. La composition ignifuge renforcée selon l'une quelconque des revendications précédentes, comprenant :
35-65 % en poids du composant polymère comprenant
5-15 % en poids de poly(2,6-diméthyl-1,4-phénylène) éther ; et
30-50 % en poids de poly(téréphtalate de butylène) ;
facultativement, 5-20 % en poids de polyamide ;
5-15 % en poids de talc ;
5-15 % en poids de fibres de verre ; et
5-23 % en poids du composant ignifuge comprenant
4-15 % en poids de diéthylphosphinate d'aluminium ; et
1-8 % en poids de polyphosphate de mélamine ;
0,1-1,5 % en poids d'un agent de compatibilité comprenant de l'acide fumarique, de l'acide maléique, de l'anhydride maléique, de l'acide citrique ou une combinaison de ceux-ci ;
6-8 % en poids de styrène-éthylène-butadiène-styrène comme modificateur d'impact ; et
0,1-5 % en poids de la composition d'additifs,
chacun d'entre eux étant basé sur le poids total de la composition.

12. Procédé de fabrication selon la composition ignifuge renforcée selon l'une quelconque des revendications précédentes, le procédé comprenant le mélange par fusion les composants de la composition.

13. Article comprenant la composition ignifuge renforcée selon l'une quelconque des revendications 1 à 11.

14. L'article selon la revendication 13, dans lequel l'article est un article moulé par injection, de préférence un composant électrique, plus préférentiellement un disjoncteur moulé ou un boîtier de disjoncteur moulé.
